# EUROPEAN PATENT SPECIFICATION

(11) **EP 1 230 285 B1**
(45) Date of publication and mention of the grant of the patent: **17.05.2006**
(21) Application number: 00979506.3
(22) Date of filing: 19.10.2000
(51) Int. Cl.: C08G 18/42, C08G 18/80

(54) **POLYESTER POWDER COATING COMPOSITIONS BASED ON 1,3-PROPANEDIOL**
AUF 1,3-PROPANDIOL BASIERENDE POLYESTERPULVERBESCHICHTUNGSZUSAMMENSETZUNGEN
COMPOSITIONS DE REVETEMENT PAR PULVERISATION DE POLYESTER A BASE DE PROPANEDIOL-1,3

(30) Priority: 19.10.1999 US 160339 P; 27.09.2000 US 671227
(43) Date of publication of application: 14.08.2002
(73) Proprietor: SHELL INTERNATIONALE RESEARCH MAATSCHAPPIJ B.V., 2596 HR Den Haag (NL)
(72) Inventor: BOON, Wyndham, Henry, North Canton, OH 44720 (US); FORSCHNER, Thomas, Clayton, Richmond, TX 77469 (US); GWYN, David, Eric, Houston, TX 77072 (US); SMITH, Oliver, Wendell, Petal, MS 39465 (US); THAMES, Shelby, Freland, Hattiesburg, MS 39401 (US); ZHOU, Lichang, Hattiesburg, MS 39406 (US)
(86) International application number: PCT/EP2000/010354
(87) International publication number: WO 2001/029107

(56) References cited:
- EP-A- 1 024 158
- US-A- 5 160 792
- US-A- 5 739 204

## Description

The present invention relates to a blocked urethane crosslinked polyester powder coating. More particularly, the present invention relates to the modification of the polyester typically used in hydroxyl terminated polyester-polyurethane coatings with 1,3-propanediol (PDO) for significantly improved flexibility, impact resistance and toughness, with other key properties unchanged over a broad range of PDO concentrations.

The development of powder coatings has become increasingly significant in recent years. Powder coatings release no harmful solvents during application, may be applied in a highly efficient manner with little waste and, thus, are considered particularly environmentally friendly and economical.

Particularly light and weather resistant coatings may be obtained using heat curable, polyurethane (PUR) powder coatings. The PUR powder coatings currently commercially available generally contain solid polyester polyols, which are cured with solid blocked aliphatic or, usually, cycloaliphatic polyisocyanates.

Materials used in the manufacture of powder coatings are classified broadly as either thermosetting or thermoplastic. Thermosetting coatings, when compared to coatings derived from thermoplastic compositions, generally are tougher, more resistant to solvents and detergents, have better adhesion to metal substrates and do not soften when exposed to elevated temperatures. However, the curing of thermosetting coatings has created problems in obtaining coatings which have, in addition to the above-stated desirable characteristics, good smoothness and flexibility.

Thermoset powder coatings can be grouped into epoxy, epoxy-polyester, polyester-urethane, TGIC polyester and acrylic. Polyester-urethane coatings can be aliphatic or aromatic urethane-polyester. Aliphatic urethane-polyester coatings are usually best applied in thin film applications, and where the film thickness is controlled they can provide a tough, durable film, surface smoothness, flexibility, and exterior weathering characteristics. Aromatic urethane powder systems can be equal to aliphatic in mechanical performance, but exhibit decreased exterior durability.

Coatings derived from thermosetting coating compositions should possess good impact strength, hardness, flexibility, and resistance to solvents and chemicals. For example, good flexibility is essential for powder coating compositions used to coat sheet (coil) steel which is destined to be formed or shaped into articles used in the manufacture of various household appliances and automobiles where the sheet metal is flexed or bent at various angles.

Powder coating systems based on hydroxyl polyesters such as neopentyl glycol based hydroxyl polyesters and caprolactam-blocked polyisocyanate cross-linking agents have been used in the coatings industry. See, for example, those described in US-A-3822240 and US-A-4150211.

Neopentyl glycol is often used in formulations for polyester powder coatings along with a mixture of terephthalic and isophthalic acids branched with small amounts of trimethylol propane. Typically when the polyester used in this type of powder coating is modified for improved flexibility, impact, and toughness, then other properties of significance to the coating are compromised. Other potential modifiers include adipic acid, 1,4-butanediol, ethylene glycol, and 2-methyl-1,3-propanediol.

JP-A-11080608 discloses a powder coating composition which provides coats with a high gel fraction and contains a polyol, a polyaddition compound containing a urethodione group, and a catalyst such as butyltin stearate.

The addition of diols to some solvent based or aqueous formulations has been suggested. US-A-5569707 discloses an aqueous dispersion of polyester-polyurethanes having an acid number of 5 to 60 mg KOH/g which are prepared from 15 to 90% of a linear polyester polyol which is the reaction product of an acid component selected from adipic, sebacic, azelaic, and hydrogenated dimeric fatty acids, and mixtures thereof and a diol component, 0-30% of an acid component selected from cycloliphatic dicarboxylic and/or tricarboxylic acids having a molecular weight of 154 to 198, or anhydrides of these acids, and 0-10% of a trifunctional or higher alcohol. The product is a soft feel coating. In formulations such as this much of the range described would not be usable as a powder coating, because the composition would have a low Tg and poor storage stability.

In US-A-5219663 there is disclosed an aromatic polycarbonate polyurethane resin useful as a magnetic recording medium, comprising the reaction product of an aromatic polycarbonate polyol, a polyisocyanate, and a chain extender component having a polar group selected from the group consisting of hydroxy group, carboxyl group, phosphonic acid group, sulfonic acid group, tertiary amino group and a salt thereof, and a base film.

US-A-3691258 discloses a two component, aminoplast-polyester, solvent based coating composition in which the polyester is produced by the esterification of 1-33 molar percent of at least one aliphatic polyol and 99-67 percent of a diol component comprising one or both of ethylene glycol and 1,2-propanediol, wherein 0-30 molar percent of the total amount of the diol can be selected from the group consisting of aliphatic or cycloaliphatic diols or mixtures thereof.

US-A-5739204 discloses solvent based polyester coating compositions characterized by the incorporation of repeating units of 1,3-propanediol, in addition to neopentyl glycol and at least one cyclic dicarboxylic acid. The polyester coatings preferably contain melamine-formaldehyde resin and catalysts.

Solvent based systems have very different parameters from powder coatings formulations. The T_{g} can be low. Solvent based systems are formulated for solubility, whereas that is not required in powder based coatings.

There does not appear to be any reference in the art which suggests the incorporation of 1,3-propanediol into a polyester powder coating composition for increased flexibility without the loss of other critical properties.

In accordance with the foregoing the present invention comprises a polyester powder coating exhibiting improved flexibility, without the loss of other key properties.

In particular, in accordance with the present invention there is provided a polyester powder coating composition having as its elements:
a) a polyester resin formed by reacting an aliphatic glycol and one or more dicarboxylic acids, wherein the aliphatic glycol is from 5 to 50% molar 1,3-propanediol;
b) a blocked polyisocyanate crosslinking agent; and
c) optionally conventional catalysts, auxiliary agents, and additives.

In accordance with the present invention there is also provided a polyester powder coating composition having as its essential elements:
a) a polyester resin characterized by a hydroxyl value of 30 to 100 mg KOH/g, formed by reacting neopentyl glycol with a mixture of terephthalic acid and isophthalic acid, wherein the ratio of terephthalic to isophthalic is in the range of 50/50 to 90/10, and wherein 15 to 50% molar of the neopentyl glycol is substituted with 1,3-propanediol; and
b) a caprolactam blocked isophorone diisocyanate.

Said polyester resin is preferably characterised by a hydroxyl value of 40 to 90 mg KOH/g and a Tg of greater than 45°C.

It has now been demonstrated that by partially replacing the neopentyl glycol with 1,3-propanediol the formulation exhibits improved impact resistance, flexibility, and toughness with other key properties essentially unchanged over a broad range of 1,3-propanediol concentrations.

The present invention will now be described by way of example with reference to the accompanying drawings, in which:-
Figure 1 is a graph showing the Differential Scanning Calorimetry (DSC) curves of polyester resins;
Figure 2 is a graph showing the Dynamic Viscosity of polyester resins; and

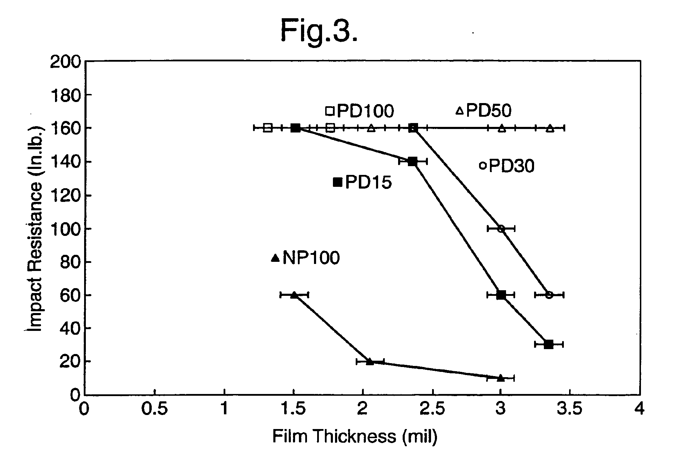

Figure 3 is a graph showing the Front Impact Resistance versus Film Thickness of the polyester resins.

In the present invention it has been found that replacing neopentyl glycol (NPG) with from 5 to 50%, preferably from 10 to 50, more preferably from 15 to 50% molar, 1,3-propanediol on a molar basis provides significant improvements in the flexibility of blocked urethane crosslinked polyester powder coatings, while other properties were about the same as noted in a control using 100% NPG. Properties of hydroxyl capped polyesters that were examined were hydroxy equivalent, melt viscosity, acid number, color before grinding, glass transition temperature (T_{g}), processability, storage stability, front/reverse impact at room temperature and at -20°C, gloss, hardness, adhesion, MEK double rub, and water resistance.

The starting materials for the present invention are an aliphatic diol, an aromatic dicarboxylic acid, a crosslinking agent, 1,3-propanediol, and optionally conditioning agents, auxiliary agents and other conventional catalysts and additives.

Suitable aliphatic diols have a molecular weight of 62 to 500 and may optionally contain ether groups, ester groups, and/or carbonate groups. Suitable aliphatic diols include, but are not limited to, ethylene glycol, 1,2-propanediol, 2-methyl-1,3-propanediol, 1,3- and 1,4-butanediol, 1,6-hexanediol, diethylene glycol, dipropylene glycol, neopentyl glycol and mixtures of these diols. Other suitable diols include triethylene glycol, tetraethylene glycol, tripropylene glycol, tetrapropylene glycol, polycarbonate diols having hydroxyl numbers of about 56 to 168, dimeric fatty alcohols and mixtures of these diols. The reactive hydroxyl component (carboxyl, amide) can be simple monomeric units or oligmeric units or low molecular weight polymeric units. The preferred diols are aliphatic glycols such as 1,3-butylene glycol or 1,4-butylene glycol; ethylene glycol and propylene glycols; and neopentyl glycol. Neopentyl glycol was most preferred and used in the examples herein. Also useful is a minor amount of a trihydric or higher alcohol as will be discussed below.

Suitable acids include saturated, unsaturated, aliphatic, or aromatic dicarboxylic acids such as phthalic, isophthalic, terephthalic, sebacic, maleic, fumaric, succinic, adipic, azelaic, malonic, dodecanedioic, and similar dicarboxylic acids. The dicarboxylic acids preferred in the present invention were isophthalic and terephthalic, used individually or mixed, in a ratio of terephthalic to isophthalic of 50/50 to 90/10, typically about 80/20.

A branching agent is also useful, such as, for example, a small amount of a triol or higher alcohol. Suitable branching agents include, but are not limited to trimethylol-ethane, trimethylolpropane, or pentaerythritol. The preferred was trimethylolpropane.

The hydroxyl functional polyesters to be used in the invention were synthesized by a two stage process. In stage 1, terephthalic acid (TPA) and NPG/PDO diols were reacted at a temperature in the range of 150-250°C, preferably 170 to 230°C, to form a prepolymer. In stage 2, isophthalic acid (IPA) and trimethylolpropane triol were added and the esterification was continued to an acid value below 3 mg KOH/g. The total reaction time was approximately 15 to 20 hours. A conventional catalyst for promotion of an esterification reaction, such as dibutyltin oxide, can be used in catalytic amounts of 0.01 to 1 wt%. Xylene/water were added before the reaction started to facilitate the removal of water formed during the reaction. 1,3-propanediol was substituted for neopentyl glycol in molar increments of 15, 30, 50, and 100%.

There are alternative ways of carrying out the reaction, as will be apparent to those skilled in the art. A commercial scale reaction would probably rarely use xylene/water and could start with an ester, such as dimethylterephthalate (DMT) or dimethylisophthalate (DMI). It is also possible to charge all the acids at stage 1 and not delay addition of isophthalic acid. It is also possible to use acid chlorides.

Powder coatings were prepared from the 1,3-propanediol derived polyesters formulated with a blocked polyisocyanate crosslinking agent, a flow control agent, and optionally a catalyst. Conventional pigmenting materials (pigments or dye), such as titanium dioxide, may also be included in the formulation to impart a desirable colour to the coated substrate.

Examples of blocked polyisocyanate crosslinking agents include, but are not limited to: E-caprolactam blocked isophorone diisocyanate, such as "Huls 1530" or "Cargill 2400"; E-caprolactam blocked toluene diisocyanate, such as "Cargill 2450"; and methyl ethyl ketoxime blocked isophorone diisocyanate, such as "Cargill 2405". A suitable range for the crosslinking agent used is in a mole ratio of NCO/OH of 1/1 to 1.1/1, but the preferred results were obtained using only a slight molar excess of NCO.

A flow control or levelling agent is desirably incorporated into the coating formulation to aid in levelling the applied and thermoset coatings. Such flow control agents typically comprise acrylic polymers and are available from several suppliers, i.e., "MODAFLOW" from Monsanto Company, "BYK 360P" from BYK Mallinkrodt and "ACRONAL" from BASF. A suitable concentration range for incorporation of the flow control agent into the coating was 0.25-1.5 wt.% based on the weight of the resin solids, and preferably in the range of 0.60-1 wt.%.

The powder coatings can be cured or crosslinked without the use of a catalyst. However, it is optional to use a conventional catalyst to promote the crosslinking reaction of the polyisocyanate with the polyesters. Suitable catalysts include alkali metal hydroxides or alkaline earth metal hydroxides, alkali metal carbonates, alkaline earth metal carbonates, alkali metal alcoholate organometal compounds such as stannous octoate, di-n-butyltin diacetate, di-n-butyltin laurate, di-n-butyltin mercaptide, di-n-butyltin thiocarboxylate, di-n-butyltin maleate, dioctyltin captide, dioctyltin thiocarboxylate, dioctyltin maleate, acryloxytri-n-butyltin, acryloxytriphenyltin, allyltri-n-butyltin, allyltrimethyltin, allyltriphenyltin, bis(2-ethylhexanoate)tin, bis(neodecanoate)tin, bis(tri-n-butylstannyltin)acetylene, bis(tri-n-butyltin)acetylene dicarboxylate, bis(triphenyltin)oxide, n-butyltin hydroxide oxide, n-butyltris(2-ethylhexanoate)tin, cyclopentadienyltri-n-butyltin, 1,3-diacetoxy-1,1,3,3-tetrabutyltin oxide, diallyl-di-n-butyltin, di-n-butylbis(2-ethylhexanoate)tin, di-n-butylbis(2-ethylhexylmaleate)tin, di-n-butylbis(methylmaleate)tin, din-butylbis (2,4-pentanedionate) tin, di-n-butyldiacetoxytin, di-t-butyldiacrylate tin, di-n-butyl-n-butoxytin, di-n-butyldimethacrylate tin, di-n-butyldimethoxytin, di-n-butyldiacrylate tin, di-n-butyl-S,S'-bis(isooctylmercaptoacetate)tin, di-n-butyltin oxide, di-n-butyltin sulfide, diethyltin oxide, dimethylaminotri-n-butyltin, dimethylaminotrimethyltin, dimethyl-S,S'-bis(isooctylmercaptoacetate)tin, dimethyldineodecanoate tin, dimethylhydroxy(oleate)tin, dimethyltin oxide, dioctyldilaurylate tin, dioctyldineodecanoate tin, dioctyltin oxide, divinyl di-n-butyltin, 1-ethoxyvinyl tri-n-butyltin, ethynyltri-n-butyltin, methacryloxytri-n-butyltin, phenylethynyltri-n-butyltin, phenyltri-n-butyltin, tetraacetoxytin, tetraallyltin, tetra-t-butoxytin, tetra-n-butyltin, tetraethyltin, tetraisopropoxytin-isopropanol adduct, tetraisopropyltin, tetrakis (diethylamino)tin, tetrakis(dimethylamino)tin, tetramethyltin, tetra-n-octyltin, tetra-n-pentyltin, tetraphenyltin, tetravinyltin, tri-n-butylbenzoyloxytin, tri-n-butylethoxytin, tri-n-butylmethoxytin, tri-n-butyltin, vinyltri-n-butyltin, phenylmercurypropionate, and lead octate; monoamines such as triethylamine, and N,N-dimethylcyclohexylamine; diamines such as 1,4-diazabicyclo-2,2,2-octane, N,N,N',N'-tetramethylethylenediamine, N,N,N',N'-tetramethyl propane 1,3-diamine, and N,N,N',N'-tetramethylhexane 1,6-diamine; triamines such as N,N,N',N",N"-pentadimethyl diethylene triamine, N,N,N',N",N"-pentamethyl dipropylene triamine, tetramethyl guanidine; cyclic amines such as triethylene diamine, N,N'-dimethyl piperazine, N-methyl,N'-(2-dimethylamino)ethylpiperazine, N-methylmorphorine, N.(N',N'-diethylaminoethyl)-morphorine, and 1,2-dimethylimidazole; alcohol amines such as dimethylaminoethanol, dimethylaminoethoxyethanol, N,N,N'-trimethylaminoethanolamine, N-methyl-N'-(2-hydroxyethyl)-piperazine, and N-(2-hydroxyethyl)morphorine; etheramines such as bis(2-dimethylaminoethyl) ether ethylene glycol bis(3-dimethyl)-aminopropyl ether; and further salts such as calcium chloride, lithium chloride, lithium bromide, and potassium iodide. It is preferable to use the tin-based organometal complex and organometal salt as a catalyst. These catalysts may be used either alone or in combination. Further, as the kind and amount of the catalyst to be used are variable depending on the kind and amount of the resin and polyvalent organic cyanate, and further the curing conditions, careful selection is necessary to meet the required performance. For the present invention dibutyltin dilaurate, dibutyltin oxide, stannous octoate, etc. would provide good results. A suitable concentration range for incorporation of the catalyst into the coating was 0.01-1 wt.% based on the weight of the resin solids, and preferably in the range of 0.05-0.4 wt.%.

All the ingredients were initially premixed in a high speed mixer for 2 minutes to assure homogenous mixing and fragment the solid component into small particles. The resulting intimate mixture was then continuously processed through a twin screw extruder to produce a uniform viscous melt. The extrusion temperature was maintained at 80°C in both zone 1 and 2 at 150 rpm. Molten extrudates were passed through a pair of water cooled squeeze rolls to yield a friable product. The products were then pulverized using a hammer mill with liquid nitrogen fed slowly into the grinding chamber. Classification on an Alpine sieve afforded powders with particle sizes of 125 microns or less.

The powders were electrostatically spray applied to grounded cold-rolled steel panels and coating properties were evaluated after curing.

Polyester resins modified with 1,3-propanediol afforded properties similar to those based on neopentyl glycol as discussed in Examples 1-5 and Table 2. Glass transition temperatures (Tg) of the polyesters decreased as the content of 1,3-propanediol increased as shown in Table 2. For example, the Tg values ranged from 61°C for the neopentyl glycol polyester to 48°C for the 50% PDO polyester.

Glass transition temperatures for the polyesters were determined from the second heating cycle via Differential Scanning Calorimetery (DSC) at a scanning rate of 10°C/minute. This involved first heating the samples to a melt and then rapidly cooling the resin prior to heating the material a second time.

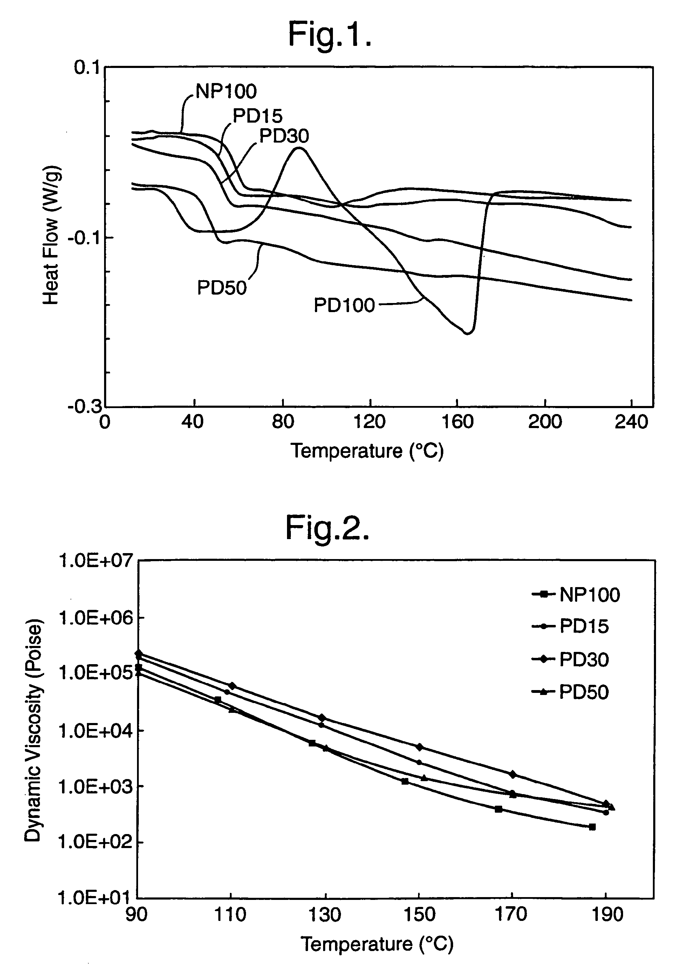

No crystallization or melting peaks were noted on the DSC curves of polyesters derived from neopentyl glycol and the mixture of neopentyl glycol and 1,3-propanediol, indicating that these polyesters were amorphous. This is shown as a graph in Figure 1. However, the polyester from pure 1,3-propanediol was a semicrystallized polymer with crystallization and melting temperatures of 88° and 167°C, respectively. Therefore, only when NPG is partially replaced with PDO, up to 50 molar %, is there provided amorphous polyesters suitable for coating applications.

Polyesters based on PDO/NPG mixtures are somewhat higher in viscosity than polyesters based on neopentyl glycol according to dynamic viscosity measurements as shown in Figure 2. However, powder mixtures from PDO/NPG polyesters were easily processed through the extruder relative to the NPG control.

All the samples passed the storage stability test except one, the powder derived from polyester containing 50% PDO, as shown in Table 5.

Modification of polyesters with 1,3-propanediol significantly improved the flexibility (measured as impact resistance) of powder coatings based on PDO/NPG mixtures as shown in Table 6. Powder coatings flexibility was further investigated at a temperature of -20°C. Polyesters modified with 1,3-propanediol still afforded significantly improved flexibility though the values were much lower than those obtained at room temperature. The impact tester and the coating panels were conditioned at least for 24 hours before testing at -20°C (Table 7).

PDO and NPG based powders provided very good 20 and 60 degree gloss as shown in Table 8. The coating film from the pure PDO polyester exhibited much lower gloss due to the crystallinity and poor flowability.

All coatings evaluated had excellent adhesion to the cold rolled steel substrates as noted in Table 9. They passed the cross-hatch tape adhesion test without failure. Replacing NPG with PDO had little effect on the final pencil hardness. The coatings also had very good water resistance for both PDO derived resins and the control by passing over 1000 hours without failure. In the case of MEK double rub resistance, the systems based on PDO/NPG mixture had slightly lower values. Therefore, results indicate that coatings based on PDO/NPG mixtures combined good film hardness and impact flexibility with high gloss and excellent adhesion.

Coatings exposed to hydrochloric acid, sodium hydroxide, gasoline and mustard for 24 hours showed excellent acid, caustic resistance and gasoline resistance as compared to the control modified coating. All the coatings also exhibited very good stain resistance to mustard stain. It is clear that the stain resistance is not only connected to the chemical resistance but also to the hardness of the coatings. Soft resins tend to stain more than the hard ones. PDO derived coatings did not affect the pencil hardness and the chemical resistance; hence no effect on the stain resistance as the data in Table 10 indicates. The data is presented in the form of ratings with 10 representing no effect and 1 indicating the most severe deterioration.

The following examples will serve to illustrate specific embodiments of the present invention disclosed herein. These examples are intended only as a means of illustration and should not be construed as limiting the scope of the present invention in any way.

### Example 1 (Comparative)

In Example 1 the hydroxyl functional polyester resins were synthesized by a two stage process. First, a one-liter, three-neck round bottom flask, was charged with 262.36 g (1.55 mol) of terephthalic acid (TPA), 191.55 g (1.82 mol) of neopentyl glycol (NPG), and 1.1 g of dibutyltin oxide. The flask was purged with nitrogen and heated to 170°C, then heated gradually to 190°C over 2 hours. The batch was then maintained at 190 to 200°C until -30% of theoretical distillate water had been collected- At this time the batch temperature was increased gradually to and maintained at 225-230°C until resin acid value was below 2 mg KOH/g resin. Then, the batch temperature was decreased to -200°C and 64.93 g (0.39 mol) of isophthalic acid (IPA) and 31.16 g (0.23 mol) of trimethylolpropane triol (TMP) were added. The temperature was maintained at -230°C and the esterification was continued to an acid value below 3 mg KOH/g. The reaction product was then poured on to aluminium foil and allowed to cool to ambient temperature. The total reaction time was approximately 15 to 20 hours. Before the reaction started, 12 ml xylene/water were added to the flask to facilitate the removal of water formed during the reaction. The basic properties of this polyester are listed in Table 2.

### Example 2

In Example 2 the hydroxyl functional polyester resins were synthesized by the same technique as that described in example 1, except that 1,3-propanediol was substituted for neopentyl glycol in a 15% mole ratio. Therefore, in the first stage 266.11 g (1.57 mol) of terephthalic acid (TPA), 165.27 g (1.57 mol) of neopentyl glycol (NPG), 21.53 g (0.28 mol) of 1,3-propanediol (PDO), and 1.1 g of dibutyltin oxide were charged into the flask. After the pre-reaction was completed, 65.86 g (0.39 mol) of isophthalic acid (IPA) and 31.24 g (0.23 mol) of trimethylolpropane triol (TMP) were added. The basic properties of this polyester are also listed in Table 2.

### Example 3, Example 4 -and Example 5 (Comparative)

In Examples 3-5, the hydroxyl functional polyester resins were synthesized by the same technique as that described in Example 1, except that 1,3-propanediol was substituted for neopentyl glycol in molar increments of 30, 50, and 100%. The molar compositions of the resulting polyester resins are shown in Table 1. The basic properties of this polyester are listed in Table 2.

**Table 1 Molar Compositions of the Polyester Resins**

| | Example 1 | Example 2 | Example 3 | Example 4 | Example 5 |
|---|---|---|---|---|---|
| | 100a NPG | 15% PDO | 30% PDO | 50% PDO | 100% PDO |
| Isophthalic acid (IPA) | 0.097 | 0.097 | 0.097 | 0.097 | 0.097 |
| Terephthalic acid (TPA) | 0.389 | 0.389 | 0.389 | 0.389 | 0.390 |
| Neopentyl glycol (NPG) | 0.457 | 0.389 | 0.321 | 0.230 | 0.000 |
| 1,3-Propanediol (PDO) | 0.000 | 0.069 | 0.138 | 0.230 | 0.462 |
| Trimethylolpropane (TMP) | 0.057 | 0.056 | 0.055 | 0.054 | 0.051 |

**Table 2 Polyester Resin Properties**

| | Example 1 | Example 2 | Example 3 | Example 4 | Example 5 |
|---|---|---|---|---|---|
| | 100% NPG | 15% PDO | 30% PDO | 50% PDO | 100% PDO |
| Hydroxy Equivalent | 1179 | 1064 | 1162 | 1406 | 1146 |
| Hydroxy Number | 47.6 | 52.7 | 48.3 | 39.9 | 49.0 |
| viscosity at 190°C, poise | 142 | 317 | 446 | 358 | ---- |
| Acid number | <3 | <3 | <2 | <2 | <3 |
| Glass Transition Temperature Tg | 61°C | 56°C | 53°C | 48°C | 32°C |
| Colour before Grinding | Clear | Clear | Clear | Slight yellow | Light yellow |

| | | | | | |
|---|---|---|---|---|---|
| PDO = 1,3 - propanediol | | | | | |

### Example 6 (Comparative)

In Example 6 the powder coatings were prepared from the hydroxyl functional polyester of Example 1 by formulating with caprolactam blocked isophorone diisocyanate crosslinking agent without a catalyst using a mole ratio for NCO/OH of 1.05/1. A flow control agent was also incorporated into the coating at 0.75 wt.% based on the weight of resin solids.

300 g of polyester resin from Example 1, 64.12 g of caprolactam blocked isophorone diisocyanate ("Cargill 2400"), and 2.73g of flow control agent ("Modaflow powder 2000"), were initially premixed in a high speed mixer for 2 minutes to assure homogenous mixing and fragment the solid component into small particles. The resulting intimate mixture was then continuously processed through a twin screw extruder to produce a uniform viscous melt. The extrusion temperature was maintained at 80°C in both zone 1 and 2 at 150 rpm. Molten extrudates were passed through a pair of water cooled squeeze rolls to yield a friable product. The products were then pulverized using a hammer mill with liquid nitrogen fed slowly into the grinding chamber. Classification on an Alpine sieve afforded powders with particle sizes of 125 µm (microns) or less.

The powders were electrostatically spray applied to grounded cold-rolled steel panels (Q Panel QD-36) which were cured in a 180°C oven for 30 minutes. The coating properties were evaluated after curing.

### Example 7, Example 8, Example 9 and Example 10 (Comparative)

In Examples 7-10 the powder coatings were prepared from the 1,3-propanediol derived hydroxyl functional polyesters by the procedure as described in Example 6. The composition of the powder coatings is shown in Table 3. The properties of the 100% neopentyl glycol were compared with the properties of coatings formulated with neopentyl glycol substituted with various percentages of 1,3-propanediol.

**Table 3 Powder Coatings Formulations**

| | Example 6 | Example 7 | Example 8 | Example 9 | Example 10 |
|---|---|---|---|---|---|
| NP100 | 300 | ---- | ---- | ---- | ---- |
| PDO15 | ---- | 300 | ---- | ---- | ---- |
| PDO30 | ---- | ---- | 300 | ---- | ---- |
| PDO50 | ---- | ---- | ---- | 300 | ---- |
| PDO100 | ---- | ---- | ---- | ---- | 280 |
| Caprolactam-b-IPDI | 64.12 | 71,05 | 65.06 | 53.77 | 61.57 |
| Levelling agent | 2.73 | 2.78 | 2.74 | 2.65 | 2.56 |
| Total | 366.85 | 373.84 | 367.80 | 356.42 | 344.13 |

| | | | | | |
|---|---|---|---|---|---|
| PDO = 1,3-propanediol | | | | | |

### Example 11

In Example 11 the processability of the various formulations was determined by processing each through an extruder. The powder based on 100% 1,3-propanediol was more difficult to process due to its higher viscosity. The results are shown in Table 4:

**Table 4 Processability of Polyester Coatings**

| Set | NP100 | PDO15 | PDO30 | PDO50 | PDO100 |
|---|---|---|---|---|---|
| Torque | 73% | 69% | 72% | 67% | 80% |
| Temperature Zone 1 (°C) | 80 | 80 | 80 | 80 | 90 |
| Temperature Zone 2 (°C) | 80 | 80 | 80 | 80 | 80 |
| Processability | Good | Good | Good | Good | Poor |

### Example 12

In Example 12 the storage stability of the various formulations was examined by placing the powder in a capped jar placed in a 40°C environment for 10 days. Powders were examined for loss of free-flowing properties or lumps not easily broken each day for 10 days. Those with free-flowing properties after 10 days passed the test. All the formulations passed the test except one. The powder derived from polyester containing 50% PDO failed to flow freely after 5 days, which was due to the relatively low Tg of the polyester. The powder containing polyester derived from 100% PDO exhibited good storage stability, which was provided by the crystallinity, since the polyester had a low T_{g}.

**Table 5 Storage Stability**

| | NP100 | FDO15 | PDO30 | PDO50 | PDO100 |
|---|---|---|---|---|---|
| Storage stability (Days) | >10 | >10 | >10 | ≈5 | >10 |

### Example 13

In Example 13 front/reverse impact resistance was tested for the various formulations. The impact resistance increased from 1.1 m.N. (10 in.lb.) for coating NP100 to 11.3 m.N. (100 in. lb.) for PD030 and to 18.1 m.N. (160 in. lb.) for coating PD050 at the film thickness around 0.08 mm (3 mils). Moreover, the impact resistance strongly depended on the film thickness with thicker film having less flexibility. Data are recorded in Table 6:

**Table 6 Front/Reverse Impact Resistance of Powder Coatings**

| Thickness/mm (mil) | NP100 m.N (in.lb) | PDO15 m.N (in.lb) | PDO30 m.N (in.lb) | PDO50 m.N (in.lb) | PDO100 m.N (in.lb) |
|---|---|---|---|---|---|
| 0.022-0.030 | ---- | ---- | ---- | ---- | ---- |
| (0.9-1.1) | | | | | |
| 0.030-0.036 | ---- | ---- | ---- | ---- | 18.1/18.1 |
| (1.2-1.4) | | | | | (160/160) |
| 0.036-0.041 | 6.8/6.8 | 18.1/18.1 | 18.1/18-1 | 18.1/18.1 | ---- |
| (1.4-1.6) | (60/60) | (160/160) | (160/160) | (160/160) | |
| 0.041-0.048 | ---- | ---- | ---- | ---- | 18.1/18.1 |
| (1.6-1.9) | | | | | (160/160) |
| 0.046-0.056 | 2.3/1.7 | ---- | ---- | 18.1/18/1 | ---- |
| (1.9-2.2) | (20/15) | | | (160/160) | |
| 0.056-0.064 | ---- | 15.8/15.8 | 18-1/18.1 | 18.1/18/1 | 18.1/18.1 |
| (2.2-2.5) | | (140/140) | (160/160) | (160/160) | (160/160) |
| 0.074-0.079 | 1.1/<0.9 | 6.8/9.0 | 11.3/13.6 | 18.1/18.1 | ---- |
| (2.9-3.1) | (10/<8) | (60/80) | (100/120) | (160/160) | |
| 0.081-0.089 | ---- | 3.4/4.5 | 6.8/9.0 | ---- | ---- |
| (3.2-3-5) | | (30/40) | (60/80) | | |

### Example 14

The powder coatings were further tested at low temperatures. The impact tester and the coating panels were conditioned for at least 24 hours before testing at - 20°C. The formulations with 1,3-propanediol still afforded significantly improved flexibility though the values were much lower than those obtained at room temperature. Results are shown in Table 7:

**Table 7 Impact Resistance of Powder Coatings at Low Temperature**

| Thickness/mm (mil) | NP100 m.N (in.lb) | PDO15 m.N (in.lb) | PDO30 m.N (in.lb) | PDO50 m.N (in.lb) | PDO100 m.N (in.lb) |
|---|---|---|---|---|---|
| 0.030-0.036 | ---- | ---- | ---- | 13.6/13.6 | 18.1/18.1 |
| (1.2-1.4) | | | | (120/120) | (160/160) |
| 0.036-0.041 | 3.2/0.9 | 5.6/4.5 | 6.8/6.8 | 9.0/9.0 | ---- |
| (1.4-1.6) | (28/8) | (50/40) | (60/60) | (80/80) | |
| 0.041-0.048 | ---- | ---- | ---- | ---- | 18.1/18.1 |
| (1.6-1.9) | | | | | (160/160) |
| 0.048-0.056 | 0.9/<0.5 | 3.4/1.8 | 3.4/2.3 | 4.5/3.4 | ---- |
| (1.9-2.2) | (8/<4) | (30/16) | (30/20) | (40/30) | |
| 0.056-0.064 | ---- | 2.0/0.7 | 2.5/0.9 | ---- | ---- |
| (2.2-2.5) | | (18/6) | (22/8) | | |
| 0.074-0.079 | ---- | 1.4/0.5 | 2.0/0.7 | ---- | ---- |
| (2.9-3.1) | | (12/4) | (18/6) | | |

### Example 15

PDO and NPG based powder coatings were examined for gloss in accord with ASTM D 523 at 20° and 60° angle. The coating from the pure PDO polyester exhibited much lower gloss due to crystallinity and poor flowability. Results are shown in Table 8:

**Table 8 Gloss**

| | NP100 | PDO15 | PDO30 | PDO50 | PDO100 |
|---|---|---|---|---|---|
| 60° gloss | 156 | 151 | 152 | 153 | 130 |
| 20° gloss | 121 | 114 | 113 | 115 | 68 |

### Example 16

All coatings evaluated had excellent adhesion to the cold rolled steel substrates. All coatings were tested for adhesion in accord with ASTM D-3359-92 and they passed the cross-hatch tape adhesion test with a value of 5B, i.e. without failure. All coatings were tested for hardness and it was observed that replacing NPG with PDO had little effect on the final pencil hardness. The coatings also demonstrated very good water resistance for both PDO derived resins and the control by passing over 1000 hours without failure. Water resistance, tested according to ASTM D-2247-94, involved exposing the coating panels to water at 40°C in a chamber. In the case of MEK double rub resistance, the systems based on PDO/NPG mixture had slightly lower values. Therefore, results indicate that coatings based on PDO/NPG mixtures combine good film hardness and impact flexibility with high gloss and excellent adhesion.

**Table 9 Hardness, Adhesion, MEK, and Water Resistance of Polyester Powder Coatings**

| Sample | NP100 | PDO15 | PDO30 | PDO50 | PDO100 |
|---|---|---|---|---|---|
| Film Thickness/mm (mil) | 0.038 | 0.038 | 0.041 | 0.038 | 0.036 |
| | (1.5) | (1.5) | (1.6) | (1.5) | (1.4) |
| Hardness | B | B | B | B | B |
| Adhesion | 5B | 5B | 5B | 5B | 5B |
| MEK Rubs | 128 | 124 | 120 | 112 | 138 |
| Water Resistance/hour s | >1000 | >1000 | >1000 | >1000 | >1000 |

| | | | | | |
|---|---|---|---|---|---|
| PDO = 1,3-propanediol | | | | | |

### Example 17

All coatings were exposed to 10% HCl, 10% NaOH, gasoline and mustard for 24 hours. They showed excellent acid, caustic resistance, and gasoline resistance compared to the control. All the coatings also exhibited very good stain resistance to mustard stain. It is clear that the stain resistance is not only connected to the chemical resistance but also to the hardness of the coatings. Soft resins tend to stain more than the hard ones. PDO derived coatings did not affect the pencil hardness and the chemical resistance, hence no effect on the stain resistance. The data is presented in Table 10 in the form of ratings with 10 representing no effect and 1 indicating the most severe deterioration.

**Table 10 Chemical and Stain Resistance of Powder Coatings**

| Set | NP100 | PDO15 | PDO30 | PDO50 | PDO100 |
|---|---|---|---|---|---|
| 10% HC1 | 10 | 10 | 10 | 10 | 10 |
| 10% NaOH | 10 | 10 | 10 | 10 | 10 |
| Mustard | 10 | 10 | 10 | 10 | 10 |
| Gasoline | 10 | 10 | 10 | 10 | 10 |

| | | | | | |
|---|---|---|---|---|---|
| PDO = 1,3-propanediol | | | | | |

### Example 18

PDO and NPG-based powder coatings were examined for gloss as described in Example 15. The testing was done with a UVA bulb. The UV exposure was over a period of days using a standard 12-hour test cycle; 8 hours UV exposure in a chamber over a 60°C water trough and 4 hours with no UV with the water at 50°C.

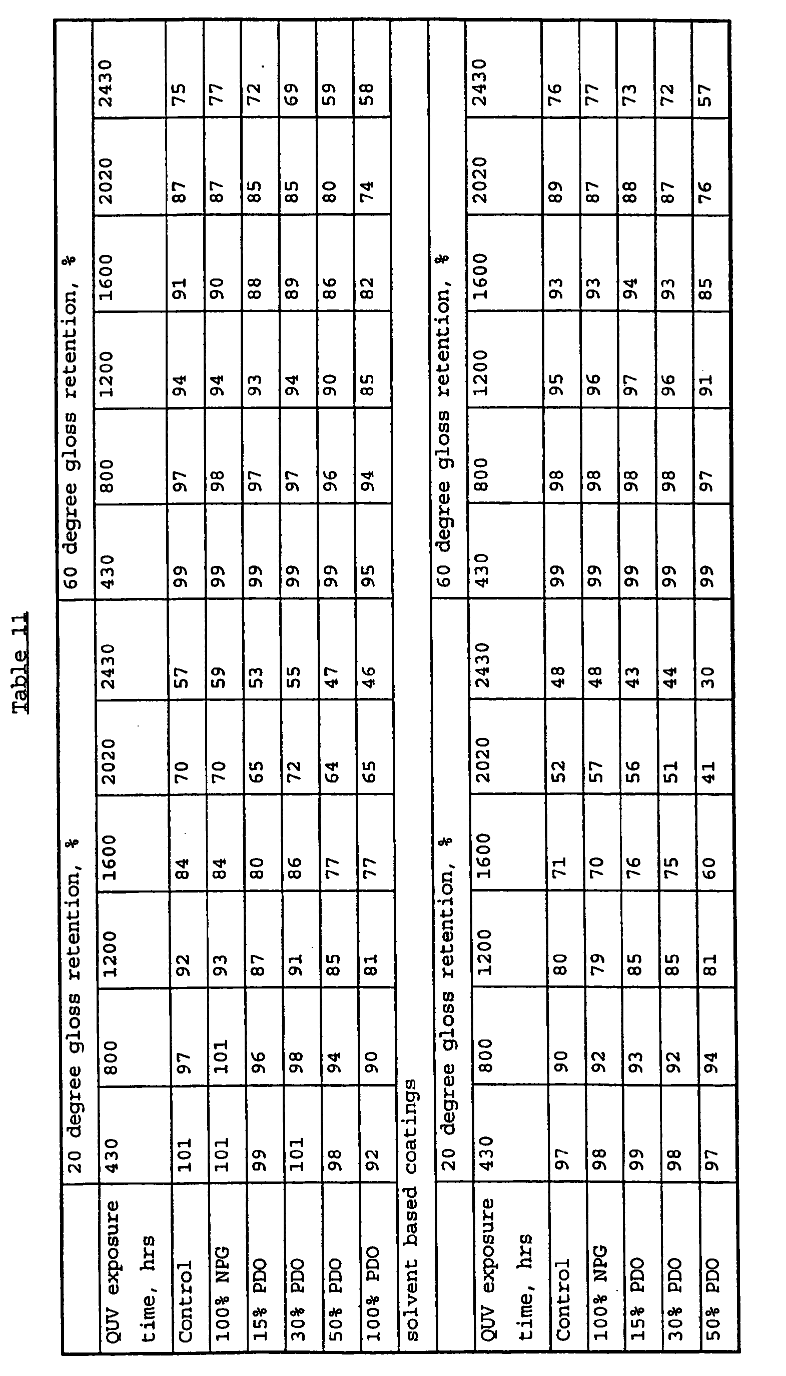

## Claims

1. A polyester powder coating composition having as its elements:
a) a polyester resin formed by reacting an aliphatic glycol and one or more dicarboxylic acids, wherein the aliphatic glycol is from 5 to 50% molar 1,3-propanediol;
b) a blocked polyisocyanate crosslinking agent; and
c) optionally conventional catalysts, auxiliary agents, and additives.

2. The powder coating composition of Claim 1 wherein the aliphatic glycol is selected from the group consisting of 1,3-butylene glycol, 1,4-butylene glycol, ethylene glycol, propylene glycol, 2-methyl-1,3 -propanediol, and neopentyl glycol.

3. The powder coating composition of Claim 2 wherein the aliphatic glycol is neopentyl glycol with from 5 to 50% molar thereof replaced by 1,3-propanediol.

4. The powder coating composition of Claim 1, 2 or 3 further comprising minor amounts of branching agents selected from the group consisting of trimethylol propane, trimethylol ethane, and pentaerythritol.

5. The powder coating composition of any one of the preceding Claims wherein the polyester resin comprises:
a) neopentyl glycol substituted with from 5 to 50% 1,3-propanediol; and
b) a dicarboxylic acid.

6. The powder coating composition of any one of the preceding Claims wherein the dicarboxylic acids are selected from the group consisting of saturated, unsaturated, aliphatic, or aromatic dicarboxylic acids.

7. The powder coating composition of Claim 6 wherein the dicarboxylic acids are selected from the group consisting of phthalic, isophthalic, terephthalic, sebacic, maleic, fumaric, succinic, adipic, azelaic, malonic, or mixtures thereof.

8. The powder coating composition of Claim 7 wherein the dicarboxylic acids are selected from isophthalic and terephthalic, separately or a mixture thereof.

9. A polyester powder coating composition having as its elements:
a) a polyester resin **characterized by** a hydroxyl value of 30 to 100 mg KOH/g, formed by reacting neopentyl glycol with a mixture of terephthalic acid and isophthalic acid, wherein the ratio of terephthalic to isophthalic is in the range of 50/50 to 90/10, and wherein 15-50% of the neopentyl glycol is substituted with 1,3 - propanediol; and
b) a caprolactam blocked isophorone diisocyanate.

10. Any coated product made using the powder coating composition of any one of the preceding Claims.

## Patentansprüche

1. Eine Polyesterpulverbeschichtungszusammensetzung mit:
a) einem Polyesterharz, gebildet durch Umsetzen eines aliphatischen Glycols mit einer oder mit mehreren Dicarbonsäuren, worin das aliphatische Glycol zu 5 bis 50 Mol-% 1,3-Propandiol ist;
b) einem blockierten Polyisocyanat-Vernetzungsmittel; und
c) gegebenenfalls üblichen Katalysatoren, Hilfsmitteln und Additiven
als ihren Elementen.

2. Pulverbeschichtungszusammensetzung nach Anspruch 1, worin das aliphatische Glycol aus der aus 1,3-Butylenglycol, 1,4-Butylenglycol, Ethylenglycol, Propylenglycol, 2-Methyl-1,3-propandiol und Neopentylglycol bestehenden Gruppe ausgewählt ist.

3. Pulverbeschichtungszusammensetzung nach Anspruch 2, worin das aliphatische Glycol Neopentylglycol ist, wovon 5 bis 50 Mol-% durch 1,3-Propandiol ersetzt sind.

4. Pulverbeschichtungszusammensetzung nach Anspruch 1, 2 oder 3, die weiterhin geringe Mengen an Vernetzungsmitteln, ausgewählt aus der aus Trimethylolpropan, Trimethylolethan und Pentaerythrit bestehenden Gruppe, umfaßt.

5. Pulverbeschichtungszusammensetzung nach einem der vorstehenden Ansprüche, worin das Polyesterharz umfaßt:
a) Neopentylglycol, das zu 5 bis 50% durch 1,3-Propandiol ersetzt ist; und
b) eine Dicarbonsäure.

6. Pulverbeschichtungszusammensetzung nach einem der vorstehenden Ansprüche, worin die Dicarbonsäuren aus der aus gesättigten, ungesättigten, aliphatischen oder aromatischen Dicarbonsäuren bestehenden Gruppe ausgewählt sind.

7. Pulverbeschichtungszusammensetzung nach Anspruch 6, worin die Dicarbonsäuren aus der aus Phthalsäure, Isophthalsäure, Terephthalsäure, Sebacinsäure, Maleinsäure, Fumarsäure, Bernsteinsäure, Adipinsäure, Azelainsäure, Malonsäure oder deren Gemischen bestehenden Gruppe ausgewählt sind.

8. Pulverbeschichtungszusammensetzung nach Anspruch 7, worin die Dicarbonsäuren unter Isophthalsäure und Terephthalsäure, getrennt oder einem Gemisch davon, ausgewählt sind.

9. Eine Polyesterpulverbeschichtungszusammensetzung mit:
a) einem Polyesterharz, **gekennzeichnet durch** einen Hydroxylwert von 30 bis 100 mg KOH/g, gebildet **durch** Umsetzen von Neopentylglycol mit einem Gemisch aus Terephthalsäure und Isophthalsäure, wobei das Verhältnis von Terephthalsäure zu Isophthalsäure im Bereich von 50/50 bis 90/10 liegt und worin 15 bis 50% des Neopentylglycols **durch** 1,3-Propandiol substituiert sind; und
b) einem mit Caprolactam blockierten Isophorondiisocyanat
als ihren Elementen.

10. Jedes beschichtete Produkt, hergestellt unter Verwendung der Pulverbeschichtungszusammensetzung nach einem der vorstehenden Ansprüche.

## Revendications

1. Composition de revêtement en poudre à base de polyester comprenant comme éléments :
a) une résine de polyester formée par réaction d'un glycol aliphatique et d'un ou de plusieurs acides dicarboxyliques, le glycol aliphatique étant pour 5 à 50 % molaires du 1,3-propanediol,
b) un agent de réticulation à base de polyisocyanate bloqué, et
c) éventuellement des catalyseurs conventionnels, des agents auxiliaires et des additifs.

2. Composition de revêtement en poudre suivant la revendication 1, dans laquelle le glycol aliphatique est choisi parmi le groupe constitué du 1,3-butylène glycol, du 1,4-butylène glycol, de l'éthylène glycol, du propylène glycol, du 2-méthyl-1,3-propanediol et du néopentyl glycol.

3. Composition de revêtement en poudre suivant la revendication 2, dans laquelle le glycol aliphatique est du néopentyl glycol avec de 5 à 50 % molaires de celui-ci remplacés par du 1,3-propanediol.

4. Composition de revêtement en poudre suivant la revendication 1, 2 ou 3, comprenant en outre des quantités mineures d'agents de ramification choisis parmi le groupe constitué du triméthylol propane, du triméthylol éthane et du pentaérythritol.

5. Composition de revêtement en poudre suivant l'une quelconque des revendications précédentes, dans laquelle la résine de polyester comprend :
a) du néopentyl glycol substitué pour 5 à 50 % par du 1,3-propanediol, et
b) un acide dicarboxylique.

6. Composition de revêtement en poudre suivant l'une quelconque des revendications précédentes, dans laquelle les acides dicarboxyliques sont choisis parmi le groupe constitué des acides dicarboxyliques saturés, insaturés, aliphatiques ou aromatiques.

7. Composition de revêtement en poudre suivant la revendication 6, dans laquelle les acides dicarboxyliques sont choisis parmi le groupe constitué des acides phtalique, isophtalique, téréphtalique, sébacique, maléique, fumarique, succinique, adipique, azélaïque, malonique ou leurs mélanges.

8. Composition de revêtement en poudre suivant la revendication 7, dans laquelle les acides dicarboxyliques sont choisis parmi les acides isophtalique et téréphtalique, séparément ou en mélange entre eux.

9. Composition de revêtement en poudre à base de polyester comprenant comme éléments :
a) une résine de polyester **caractérisée par** un indice d'hydroxyle de 30 à 100 mg de KOH/g, qui est formée par réaction de néopentyl glycol avec un mélange d'acide téréphtalique et d'acide isophtalique, le rapport entre acide téréphtalique et acide isophtalique étant de l'ordre de 50/50 à 90/10, 15 à 50 % du néopentyl glycol étant substitués par du 1,3-propanediol, et
b) un diisocyanate d'isophorone bloqué par du caprolactame.

10. Produit revêtu réalisé en utilisant la composition de revêtement en poudre suivant l'une quelconque des revendications précédentes.
